# FASCICULE DE BREVET EUROPEEN

(11) **EP 2 032 751 B1**
(45) Date de publication et mention de la délivrance du brevet: **03.03.2010**
(21) Numéro de dépôt: 07803902.1
(22) Date de dépôt: 20.06.2007
(51) Int. Cl.: D03D 25/00, D03D 11/00, D03D 13/00

(54) **STRUCTURE FIBREUSE DE RENFORT À TISSAGE MULTI-SATIN POUR PIÈCE EN MATÉRIAU COMPOSITE**
FASERVERSTÄRKUNGSSTRUKTUR EINES MEHRSATINGEWEBES FÜR EIN VERBUNDTEIL
FIBROUS REINFORCEMENT STRUCTURE OF MULTI-SATIN WEAVE FOR A COMPOSITE PART

(30) Priorité: 21.06.2006 FR 0652573
(43) Date de publication de la demande: 11.03.2009
(73) Titulaire: Snecma Propulsion Solide, 33187 Le Haillan Cedex (FR)
(72) Inventeur: COUPE, Dominique, F-33185 Le Haillan (FR); CHARLEUX, François, F-33000 Bordeaux (FR); RICHARD, Jean-Philippe, F-33320 Le Taillan Medoc (FR)
(74) Mandataire: Joly, Jean-Jacques
(86) Numéro de dépôt international: PCT/FR2007/051477
(87) Numéro de publication internationale: WO 2007/148019

(56) Documents cités:
- EP-A- 1 526 285
- JP-A- 10 338 008
- JP-A- 2005 305 276
- US-A- 4 848 414
- US-A- 5 102 725
- US-A- 5 899 241
- US-A1- 2002 090 873

## Description

### Arrière-plan de l'invention

L'invention concerne la réalisation de pièces en matériau composite et plus particulièrement la réalisation de structures fibreuses de renfort pour de telles pièces.

Un domaine d'application de l'invention est la réalisation de pièces de structure en matériau composite à renfort fibreux et matrice résine. De telles pièces sont utilisées dans de très nombreux domaines, notamment dans le domaine aéronautique. La densification de la structure fibreuse de renfort par la matrice résine est réalisée par tout moyen connu, par exemple par moulage avec transfert de résine (procédé RTM pour "Resin Transfer Moulding").

Un autre domaine d'application de l'invention est la réalisation de pièces en matériau composite thermostructural, c'est-à-dire en un matériau ayant des propriétés mécaniques qui le rendent apte à constituer des éléments de structures et ayant la capacité de conserver ces propriétés à des températures élevées. Des matériaux composites thermostructuraux sont typiquement les matériaux composites carbone/ carbone (C/C) ayant un renfort fibreux en carbone densifié par une matrice en carbone, et les matériaux composites à matrice céramique (CMC) ayant un renfort fibreux réfractaire (carbone ou céramique) densifié par une matrice céramique. Des pièces en matériau composite thermostructural sont utilisées notamment dans les domaines aéronautique et spatial. La densification de la structure fibreuse de renfort par le matériau constitutif de la matrice peut être réalisée par infiltration chimique en phase gazeuse (ou CVI pour "Chemical Vapor Infiltration") ou par voie liquide, comme cela est bien connu en soi. La densification par voie liquide consiste à imprégner la structure fibreuse par une composition liquide contenant un précurseur du matériau constitutif de la matrice, typiquement une résine, la transformation du précurseur étant réalisée par traitement thermique.

Pour des pièces en matériau composite présentant une certaine épaisseur, il est connu de réaliser la structure fibreuse de renfort en plusieurs couches superposées liées entre elles pour éviter une décohésion entre couches.

Ainsi, il a été proposé, par exemple dans les documents US 4 848 414, US 5 899 241 et EP 1 526 285, de réaliser une structure de renfort par tissage tridimensionnel avec des fils de chaîne qui lient des fils de trame appartenant à plusieurs couches différentes de fils de trame. L'armure de tissage est de type interlock avec une disposition des fils de trame en quinconce dans des plans de trame consécutifs.

Il est connu par ailleurs du document US 5 102 725 une structure fibreuse de renfort à tissage localement tridimensionnel de type satin. La structure fibreuse est constituée de deux couches de fils de trame liées ponctuellement par un premier fil de chaîne saisissant alternativement un fil sur 4 de la première couche de fils de trame et un fil sur 8 de la deuxième couche de fils de trame. Les fils de trame de la deuxième couche de fils de trame sont en outre tissés avec un deuxième fil de chaîne par tissage bidimensionnel classique de type satin, les deux fils de chaîne s'étendant principalement entre les deux couches de fils de trame. Dans la deuxième couche de fils de trame, de mêmes fils de trame sont saisis par le premier et le deuxième fil de chaîne, créant des irrégularités en surface. En outre, le mode de tissage décrit avec les fils de chaîne s'étendant tous deux entre les deux couches de fils de trame convient spécifiquement pour une texture fibreuse d'épaisseur limitée à deux couches de fils de trame.

Divers aspects doivent être pris en considération par la réalisation de telles structures fibreuses de renfort pour des pièces en matériau composite.

Ainsi, le tissage tridimensionnel doit assurer une liaison entre couches satisfaisante pour s'opposer au délaminage, mais sans affecter la tenue mécanique dans des directions parallèles aux plans des couches.

En outre, dans le cas de pièces en matériau composite devant présenter un état de surface lisse, il est souhaitable d'éviter que la structure fibreuse de renfort présente des irrégularités de surface importantes qui nécessitent des opérations supplémentaires, telles qu'un arasage de la surface, par exemple après un premier stade de densification, ou stade de consolidation, pour éliminer de telles irrégularités, ou un ajout en surface d'une state bidimensionnelle, par exemple une strate de tissu, avant la fin de la densification.

### Objet et résumé de l'invention

L'invention a pour but de fournir une structure fibreuse de renfort formée au moins en partie par tissage tridimensionnel et présentant un bon compromis entre les contraintes ci-dessus.

Ce but est atteint selon l'invention du fait que le tissage tridimensionnel est un tissage multicouches à armure de type satin, ou tissage multi-satin comprenant :
- au moins une première, une deuxième et une troisième couches adjacentes de fils de trame, les fils de trame des première, deuxième et troisième couches de fils de trame étant disposés en colonnes comprenant chacune un fil de trame de chacune de ces couches,
- un premier ensemble de fils de chaîne chacun saisissant alternativement un fil de trame sur n de la première couche de fils de trame et un fil de trame sur n de la deuxième couche de fils de trame adjacente à la première, et
- un deuxième ensemble de fils de chaîne chacun saisissant alternativement un fil de trame sur n de la deuxième couche de fils de trame et un fil de trame sur n de la troisième couche de fils de trame adjacente à la deuxième,
- les deux ensembles de fils de chaîne décrivant des parcours semblables mais décalés l'un par rapport à l'autre dans le sens chaîne de sorte que, dans un même plan d'armure, les fils de la deuxième couche de fils de trame saisis par un fil de chaîne du premier ensemble et par un fil de chaîne du deuxième ensemble sont différents, et
- le nombre n étant un nombre entier au moins égal à 3.

Avantageusement, les fils de trame saisis par un même fil de chaîne dans deux desdites couches de fils de trame sont situés dans des colonnes de fils de trame non adjacentes.

De préférence, n est au moins égal à 5.

L'utilisation d'une armure multi-satin présente plusieurs avantages.

Tout d'abord, dans le sens chaîne, on conserve la tenue mécanique d'une armure satin tout en réalisant une liaison entre couches de fils de trame.

En outre, une armure de type satin permet au tissu de conserver un bon degré de déformabilité pour s'adapter à des formes non planes.

Dans le cas d'une structure fibreuse ayant une partie interne, ou coeur, et une partie externe, ou peau, adjacente à une surface extérieure de la structure fibreuse, le coeur est avantageusement au moins partiellement formé par un tel tissage multi-satin.

La peau peut alors être formée par tissage bidimensionnel. Le tissage en peau peut être à armure de type satin, contribuant à donner un aspect de surface lisse, et le pas de satin en peau est alors avantageusement égal au pas de satin dans une partie du coeur de la structure fibreuse adjacente à la peau. En variante, le tissage en peau peut être à armure toile offrant un accès aisé aux gaz à travers la peau dans le cas d'une densification CVI.

On pourra faire évoluer l'armure multi-satin dans le coeur de la structure fibreuse, par exemple en formant deux parties du coeur par des tissages multi-satin de pas respectifs différents.

Selon une particularité de la structure fibreuse, le coeur est tissé avec des fils formés de fibres discontinues et la peau est tissée avec des fils formés de filaments continus. L'utilisation de fils formés de fibres discontinues à coeur permet, par un foisonnement de ces fibres, de fractionner la porosité à coeur tandis que l'utilisation de fils formés de filaments continus en peau favorise l'accès aux gaz lors d'une densification CVI et un état de surface exempt d'irrégularités importantes. Une réduction de gradient de densification CVI entre coeur et peau peut ainsi être obtenue.

Selon une autre particularité de la structure fibreuse, l'une au moins des contextures en chaîne et en trame varie dans l'épaisseur de la structure fibreuse. Une variation de contexture en sens décroissant entre coeur et peau est de nature à favoriser l'accès aux gaz vers le coeur de la structure fibreuse lors d'une densification CVI.

Selon encore une autre particularité de la structure fibreuse, les parties différentes de la structure fibreuse sont réalisées avec des fils de natures chimiques différentes, notamment afin de leur conférer des propriétés particulières souhaitées, notamment de résistance à l'oxydation ou à l'usure.

Selon encore une autre particularité de la structure fibreuse, les fils utilisés pour le tissage ont un titre qui varie au sein de la structure fibreuse. Le titre des fils pourra notamment être décroissant entre une partie de coeur et une partie de peau de la structure fibreuse, afin de faciliter l'accès aux gaz à coeur lors d'une densification CVI.

### Brève description des dessins

Des modes de réalisation de l'invention seront décrits ci-après, à titre indicatif mais non limitatif. Il sera fait référence aux dessins annexés sur lesquels :
- la figure 1 illustre une armure de tissage tridimensionnel connue de type interlock ;
- la figure 2 illustre un plan d'armure d'une structure fibreuse obtenue par tissage multicouches de type satin ;
- la figure 3 illustre un plan d'armure d'une structure fibreuse obtenue par tissage multicouches avec armure multi-satin selon un mode de réalisation de l'invention ;
- les figures 4A à 4P illustrent des plans successifs d'armure d'une structure fibreuse selon un autre mode de réalisation de l'invention avec tissage multi-satin à coeur et tissage bidimensionnel à armure satin en peau ; et
- les figures 5A à 5L illustrent des plans successifs d'armure d'une structure fibreuse selon un autre mode de réalisation de l'invention avec tissage combinant deux armures multi-satin différentes à coeur et un tissage bidimensionnel à armure toile en peau.

### Définitions

Par "tissage bidimensionnel" ou "tissage 2D", on entend ici un mode de tissage classique par lequel chaque fil de chaîne passe d'un côté à l'autre de fils d'une seule couche de trame.

Par "tissage tridimensionnel" ou "tissage 3D", on entend ici un mode de tissage par lequel certains au moins des fils de chaîne lient des fils de trame sur plusieurs couches de trame.

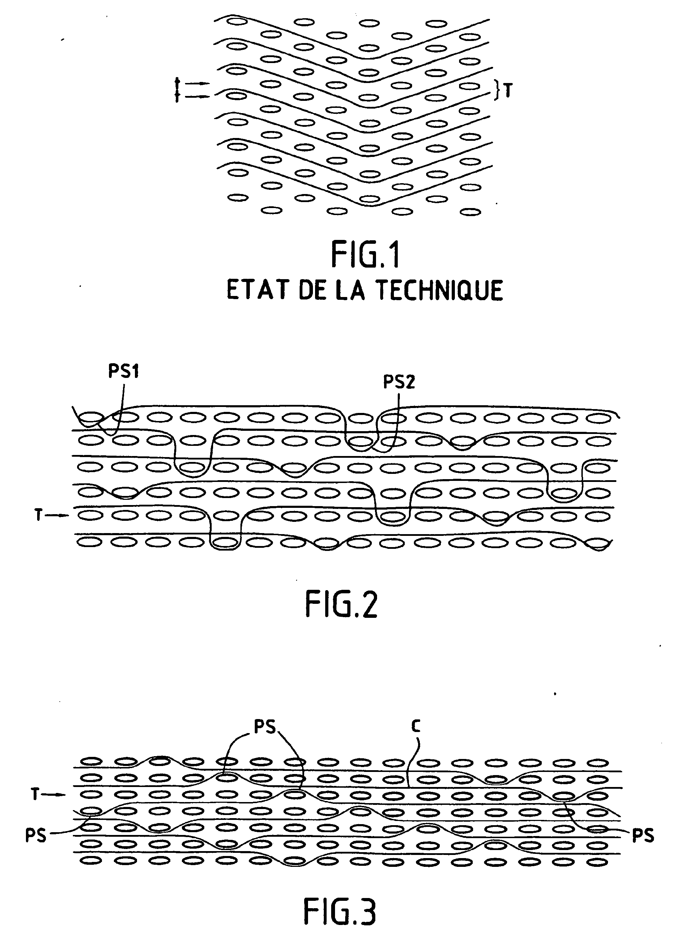

Par "tissage interlock", on entend ici une armure de tissage 3D dont chaque couche de chaîne lie plusieurs couches de trames avec tous les fils de la même colonne de chaîne ayant le même mouvement dans le plan de l'armure. La figure 1 est une vue d'un de 8 plans d'une armure interlock à 7 couches de chaîne et 8 couches de trame. Dans l'armure interlock illustrée, une couche de trame T est formée de deux demi-couches de trame t adjacentes décalées l'une de l'autre dans le sens chaîne. On a donc 16 demi-couches de trame positionnées en quinconce, chaque chaîne liant 3 couches de trame. On pourrait aussi adopter une position des fils de trame non en quinconce, les fils de trame de deux couches adjacentes étant alignés sur des mêmes colonnes.

Par "tissage multicouches", on désigne ici un tissage 3D avec plusieurs couches de trame dont l'armure de base de chaque couche est équivalente à une armure de tissu 2D classique, mais avec certains points de l'armure qui lient les couches de trame entre elles.

Par "contexture", on désigne ici le nombre de fils par unité de longueur en sens trame et en sens chaîne, une contexture faible (ou lâche) signifiant un moins grand nombre de fils, donc un tissu plus ouvert par opposition avec une contexture élevée (ou serrée).

Par "filaments continus", on entend ici de façon conventionnelle des éléments fibreux ayant une très grande longueur par rapport à leur diamètre. Ainsi, dans le cas par exemple d'une structure de renfort constituant une préforme d'une pièce en matériau composite et réalisée à partir de filaments continus, au moins une très grande majorité de ceux-ci s'étendent continûment dans la préforme en étant interrompus seulement aux limites géométriques de la préforme. Dans le cas de filaments continus non naturels, ils sont habituellement obtenus par filage d'une matière synthétique suivi éventuellement d'une ou plusieurs opération(s) physico-chimique(s) (étirage, ensimage, traitement thermique, ...).

Des fils constitués de filaments continus, ou multifilaments, sont formés en assemblant des filaments continus côte à côte avec ou sans torsion.

Par "fibres discontinues" on entend ici de façon conventionnelle des éléments fibreux qui, dans le cas de fibres non naturelles, sont formés par coupe ou étirage-craquage de filaments continus. Des fibres discontinues ou fibres courtes ont une longueur habituellement de quelques millimètres à quelques dizaines de millimètres.

Des fils constitués de fibres discontinues, ou filés de fibres, sont formés en assemblant les fibres discontinues par retorsion ou par guipage, le guipage consistant à conférer une cohésion par enroulement d'un fil de guipage autour d'un ensemble de fibres discontinues qui peuvent être non retordues ou faiblement retordues.

Dans tout le texte et sur tous les dessins, il est mentionné et représenté, par convention et souci de commodité, que ce sont les fils de chaîne qui sont déviés de leurs trajets pour saisir des fils de trame d'une couche de trame ou de plusieurs couches de trame. Toutefois, une inversion des rôles entre chaîne et trame est possible et doit être considérée comme couverte par les revendications.

### Description détaillée de modes de réalisation de l'invention

Le domaine d'application de l'invention est celui de la réalisation de structures fibreuses aptes à constituer des renforts fibreux, ou préformes, pour la fabrication de pièces en matériau composite, les pièces étant obtenues par densification des structures fibreuses par une matrice. La matrice peut être une résine, dans le cas de matériaux composites utilisés à température relativement peu élevée, typiquement jusqu'à 300°C, ou un matériau réfractaire tel que carbone ou céramique dans le cas de composites thermostructuraux.

La réalisation de la structure fibreuse par tissage 3D permet d'obtenir une liaison entre les couches, donc d'avoir une bonne tenue mécanique de la structure fibreuse et de la pièce en matériau composite obtenue, en une seule opération textile.

La figure 2 montre un plan d'armure de tissage 3D multicouches de type satin liant des couches de fils de trame T (les fils de trame n'étant pas disposés en quinconce).

Chaque fil de chaîne est périodiquement dévié de son trajet au-dessus d'une couche de trame pour, alternativement, saisir un fil de trame de cette couche de trame et saisir ensemble un fil de trame de cette couche de trame et le fil de trame situé dans la même colonne de la couche de trame adjacente inférieure. On a ainsi formation de points de satin simples classiques PS1 alternativement avec des points de satin doubles PS2 liant les fils de 2 couches de trame adjacentes, donc assurant une liaison entre couches de trame.

Toutefois, les points de satin PS2 constituent des points singuliers avec croisement de fils de chaîne qui se traduisent par des irrégularités importantes de la structure fibreuse susceptibles d'affecter la tenue mécanique d'une pièce obtenue par densification d'une telle structure fibreuse. Cet inconvénient est particulièrement notable lorsque les fils utilisés présentent une raideur assez forte, par exemple des fils en céramique ou de titre élevé. En effet, il est alors malaisé d'imposer une déformation au niveau des points PS2 qui ne perturbe pas l'arrangement des fils de trame.

C'est pourquoi l'invention vise la réalisation d'un tissage 3D multicouches avec une armure de type satin particulière ou armure « multi-satin » ne présentant pas de tels inconvénients.

Un plan d'armure "multi-satin" conforme à l'invention est représenté sur la figure 3.

Il comprend au moins 3 couches de fils de trame T (7 dans l'exemple illustré) et des fils de chaîne C, chaque fil de chaîne s'étendant principalement entre deux couches adjacentes respectives de fils de trame.

Chaque fil de chaîne est dévié alternativement dans un sens et dans l'autre pour saisir alternativement un fil de trame sur n d'une première couche de fils de trame et un fil de trame sur n d'une deuxième couche de fils de trame adjacente à la première, n étant un nombre entier au moins égal à 3, réalisant ainsi une liaison entre ces deux couches.

Le nombre n étant le même pour tous les fils de chaîne, les parcours ou mouvements des fils de chaîne sont tous semblables, tout en étant décalés dans la direction chaîne entre fils de chaîne consécutifs, de sorte que les fils d'une même couche de fils de trame saisis par des fils de chaîne sont différents.

Dans une telle armure multi-satin, le "pas" désigne ici l'intervalle entre deux points de satin PS d'un même fil de chaîne mesuré en nombre de colonnes de trame. Dans le cas de la figure 3, le pas est alternativement de 6 et de 10, donnant un pas moyen de 8, soit n/2.

Les fils saisis dans la première couche de fils de trame et ceux saisis dans la deuxième couche de fils de trame par un même fil de chaîne sont situés dans des colonnes de fils de trame différentes de préférence non adjacentes pour éviter un trajet trop sinueux au fil de chaîne, source d'irrégularités. Aussi, le nombre n est avantageusement au moins égal à 5 pour satisfaire plus facilement une telle condition.

On retrouve des parcours ou mouvements des fils de chaîne semblables dans tous les plans de l'armure multi-satin.

Par rapport à une armure interlock connue telle que celle de la figure 1, l'armure multi-satin permet de conserver de bonnes propriétés mécaniques en sens chaîne et un aspect de surface plus régulier.

En outre, la structure fibreuse présente un faible embuvage et une déformabilité lui permettant de se conformer à des formes non planes.

Dans le cas d'une structure fibreuse ayant une partie interne, ou coeur, et une partie externe, ou peau, adjacente à une surface extérieure de la structure fibreuse, la peau peut être réalisée par tissage avec une armure différente de celle du coeur, par exemple par tissage bidimensionnel avec armure de type toile, satin ou sergé afin de « fermer » le tissage en surface, une armure de type satin procurant en outre un aspect de surface lisse. Une variation d'armure de tissage en peau peut être réalisée à la surface extérieure de la structure fibreuse pour conférer des propriétés particulières voulues par exemple en passant d'une armure de type toile privilégiant une liaison serrée à une armure de type satin privilégiant un état de surface lisse.

Lorsque la structure fibreuse est destinée à la fabrication d'une pièce en matériau composite avec une matrice obtenue par infiltration chimique en phase gazeuse (CVI), il est avantageux aussi pour obtenir des propriétés mécaniques aussi peu inhomogènes que possible au sein de la pièce, de favoriser une densification par CVI avec un gradient de densification aussi faible que possible entre le coeur de la structure fibreuse et la peau de celle-ci.

A cet effet, le tissage du coeur peut être réalisé avec des fils formés de fibres discontinues pour favoriser le fractionnement de la porosité par foisonnement des fibres et l'accès de la phase gazeuse réactionnelle. On pourra utiliser des fils formés de fibres discontinues sensiblement sans torsion, la cohésion étant assurée par un fil de guipage. Le fil de guipage est avantageusement en un matériau fugace ou fugitif qui est éliminé après tissage, autorisant un fractionnement de la porosité de la structure tissée et favorisent une réduction du gradient de densification par CVI. De tels fils formés de fibres discontinues avec fil de guipage fugace ou fugitif sont décrits dans le document EP 0 489 637.

Il est avantageux encore de favoriser l'obtention, après densification, d'un état de surface exempt d'irrégularités, c'est-à-dire un bon état de finition pour éviter ou limiter des opérations de finition par usinage.

A cet effet, la peau peut être réalisée par tissage avec des fils formés de filaments continus pour éviter le foisonnement de fibres discontinues.

Encore dans le but de favoriser l'accès de la phase gazeuse réactionnelle, la peau peut être réalisée avec une contexture en chaîne et/ou en trame plus faible que dans le coeur.

Il peut être souhaitable de faire varier le titre des fils utilisés pour le tissage de la structure fibreuse, en particulier en utilisant des fils de titres différents entre coeur et peau et/ou entre chaîne et trame. Un titre de fils décroissant entre coeur et peau favorise l'accès à coeur du gaz à travers la peau dans le cas de densification par CVI. Les titres des fils peuvent aussi être choisis pour obtenir un rapport dans des limites souhaitées entre le taux volumique de fibres en chaîne et le taux volumique de fibres en trame.

Il est possible aussi de faire varier l'armure de tissage multi-satin dans le coeur, en tissant différentes parties du coeur avec des armures multi-satin de pas respectifs différents.

Il est possible encore de faire varier l'armure de tissage en peau le long de la surface extérieure.

La nature chimique des fils est choisie en fonction de l'application envisagée. Il peut être souhaitable d'utiliser des fils de natures chimiques différentes entre différentes parties de la structure fibreuse, notamment entre la partie de coeur et la partie de peau pour conférer des propriétés particulières à la pièce en matériau composite obtenue, notamment en termes de résistance à l'oxydation ou à l'usure.

Ainsi, dans le cas d'une pièce en matériau composite thermostructural à renfort de fibres réfractaires, on pourra utiliser une structure fibreuse avec des fibres carbone en coeur et des fibres en céramique, par exemple en carbure de silicium (SiC), en peau afin d'accroître la résistance à l'usure de la pièce composite au niveau de cette partie de peau.

Deux exemples de réalisation d'une structure fibreuse conformément à l'invention seront maintenant décrits. Dans tous ces exemples, le tissage est réalisé sur un métier de type Jacquard.

### Exemple 1

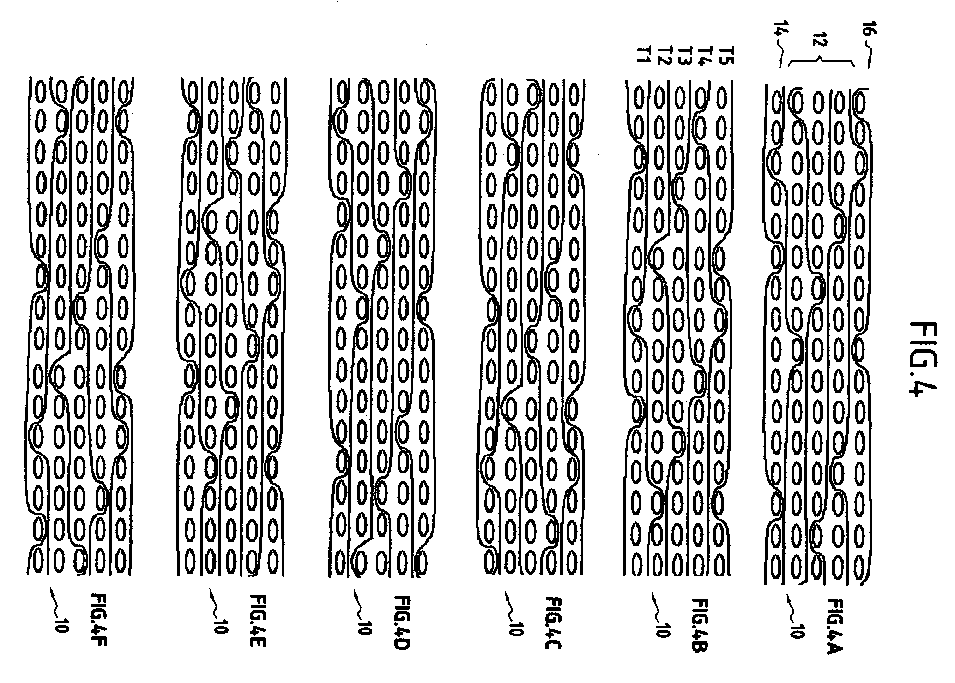

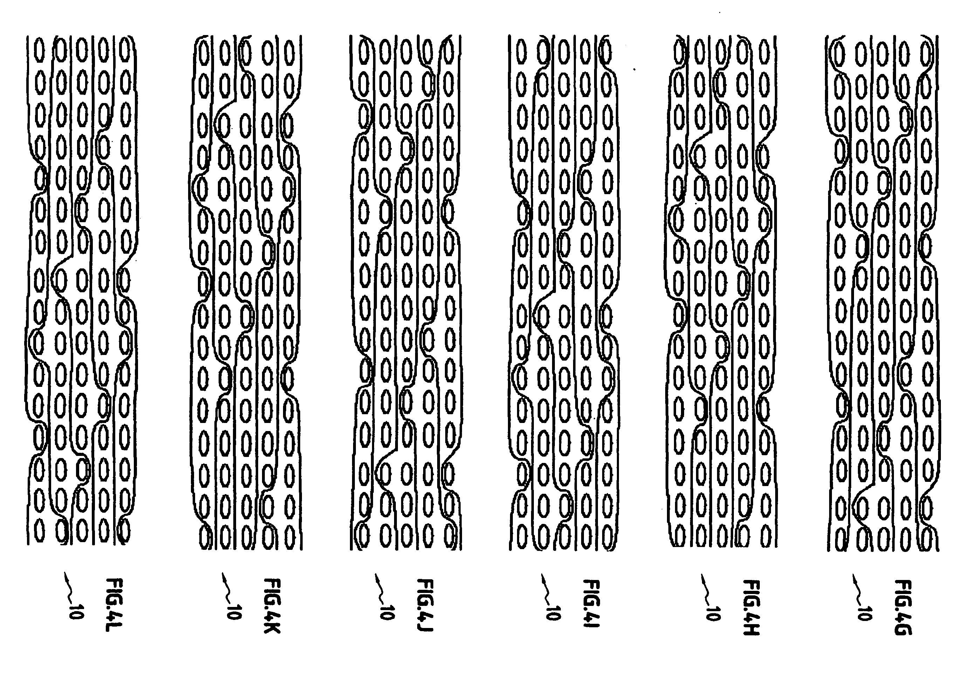

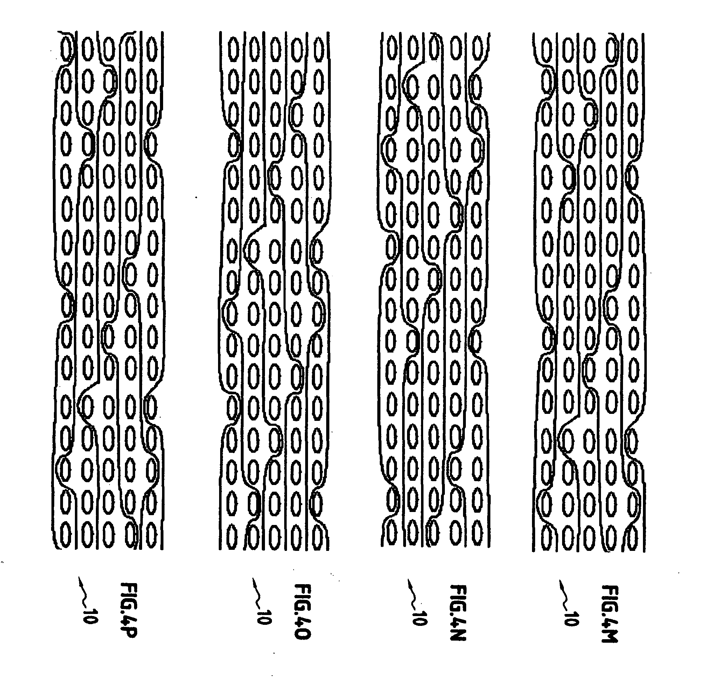

Les figures 4A à 4P représentent des plans successifs d'une armure de structure fibreuse 10 obtenue par tissage 3D avec tissage tridimensionnel multi-satin à coeur 12 et tissage bidimensionnel en peau 14, 16.

Le tissage à coeur est à armure multi-satin avec un pas de 8 et le tissage en peau est à armure satin également avec un pas de 8.

On constate que les points de satin forment des motifs réguliers et répartis dans les plans d'armure successifs, sans alignement marqué en colonne ou en profondeur (d'un plan d'armure à l'autre).

La structure fibreuse 10 comprend 5 couches de fils de trame T1 à T5. Dans le coeur 12 situé entre des peaux opposées 14, 16, le tissage multi-satin est réalisé avec des fils formés de fibres de carbone discontinues maintenues par un fil de guipage en matériau fugitif, comme décrit dans EP 0 489 637, et avec une contexture 10/10 par couche (10 fils par cm en trame et en chaîne). Le fil de guipage est par exemple en un polymère soluble tel qu'un alcool polyvinylique ou un polymère éliminable par traitement thermique sans affecter le carbone des fibres, tel qu'un polyéthylène ou acétate de polyvinyle. Dans les peaux 14, 16, le tissage à armure satin est réalisé avec des fils formés de filaments de carbone continus et avec une contexture 10/10. La liaison par tissage à armure satin ne concerne que les couches T1 et T5 de fils de trame. On notera que le tissage multi-satin du coeur s'étend jusqu'aux couches de trame des peaux afin de lier ces couches à celles du coeur.

Bien entendu, les fils utilisés pour le tissage à coeur et en peau pourraient en variante être tous du même type, c'est-à-dire tous formés de fibres discontinues ou tous formés de filaments continus.

### Exempte 2

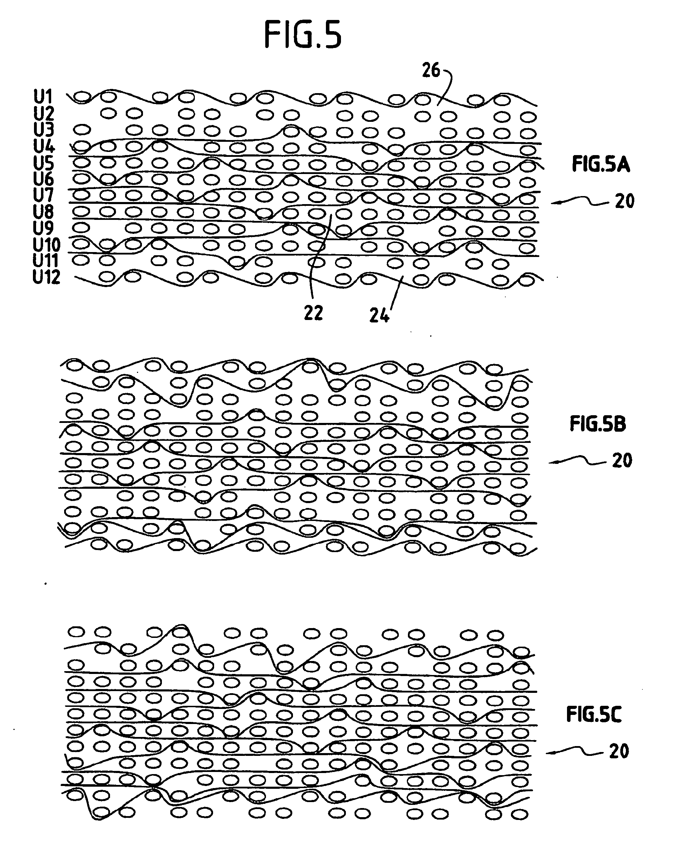

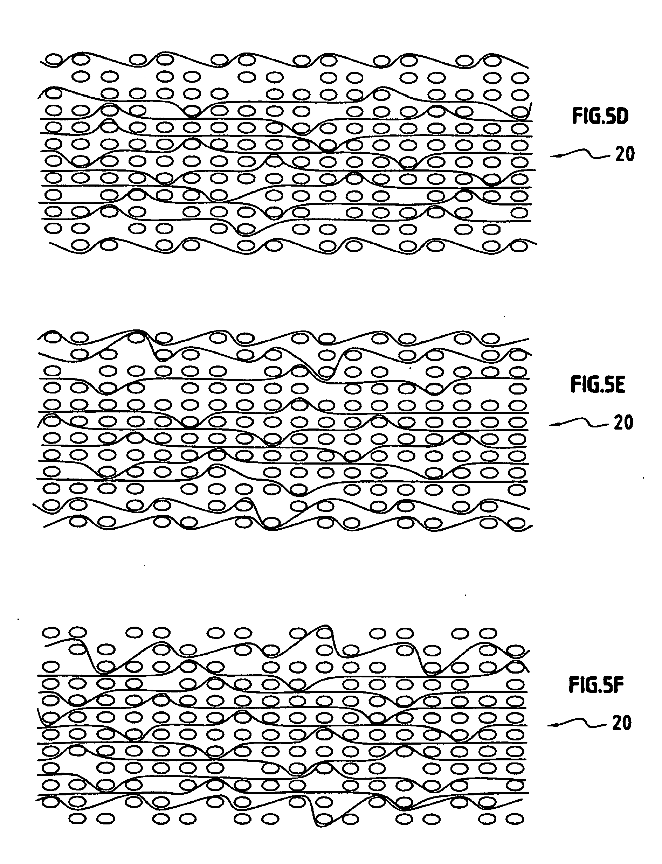

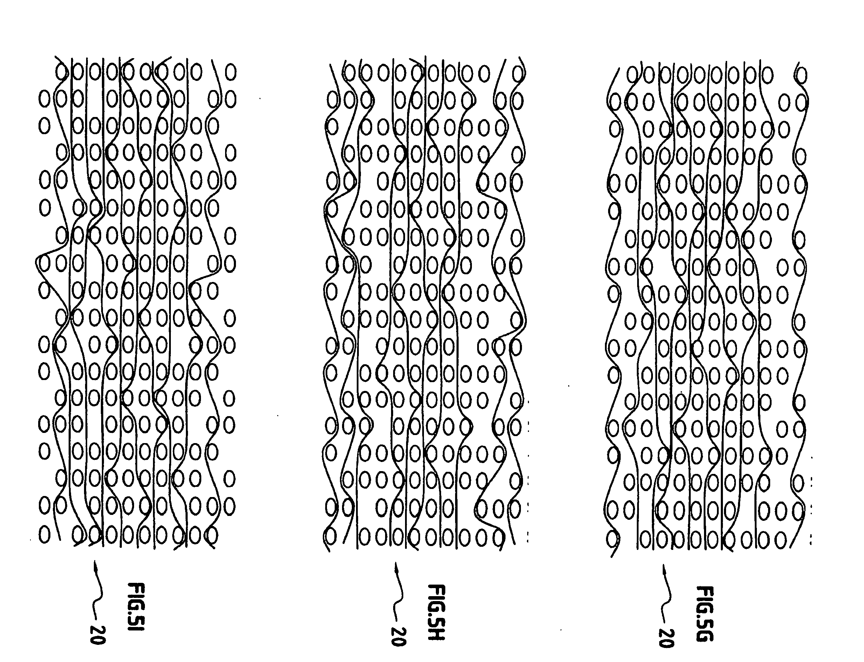

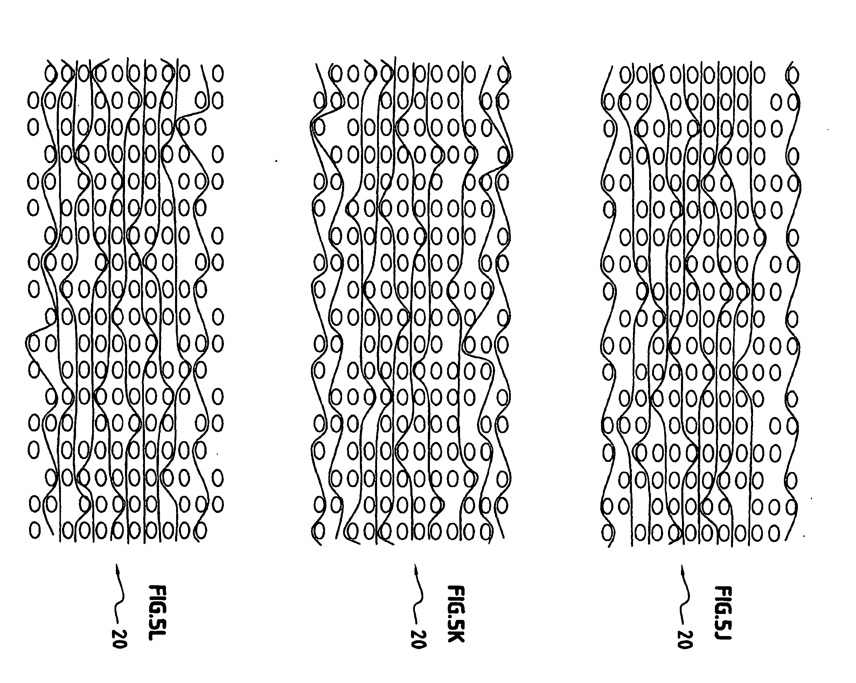

Les figures 5A à 5L représentent des plans successifs d'une structure 20 obtenue par tissage 3D multicouches comprenant 12 couches de fils de trame U1 à U12. Le tableau ci-dessous résume les armures et contextures du tissage 3D utilisé, la variation d'armure de la structure 20 étant symétrique par rapport à un plan médian avec les peaux 24, 26 situées de part et d'autre du coeur 22. Certaines couches de trame ont un nombre de fils de trame différent de celui d'autres couches, traduisant une variation de contexture en trame.

| Couches de fils de trame | Armure tissage multicouche | Contexture |
|---|---|---|
| U1 | Toile | 6,6/6,6 |
| U2 | Multi-toile | 6,6/6,6 |
| U3 | Multi-satin de 5 | 8/8 |
| U4 | Multi-satin de 5 | 8/8 |
| U5 | Multi-satin de 6 | 10/10 |
| U6 | Multi-satin de 6 | 10/10 |
| U7 | Multi-satin de 6 | 10/10 |
| U8 | Multi-satin de 6 | 10/10 |
| U9 | Multi-satin de 5 | 8/8 |
| U10 | Multi-satin de 5 | 8/8 |
| U1 | Multi-toile | 6,6/6,6 |
| U12 | Toile | 6,6/6,6 |

Dans cet exemple, l'armure du tissage multi-satin et la contexture varient entre coeur et peaux. On notera que la variation d'armure et de contexture est d'une certaine façon progressive en adoptant un satin de 5 pour les trames U3, U4 et U9, U10, entre le satin de 6 des couches U5 à U8 et la toile des peaux, ceci afin d'éviter une discontinuité trop franche entre coeur et peau.

On pourrait, en variante, utiliser une armure de type sergé pour le tissage multicouches des peaux.

## Revendications

1. Structure fibreuse de renfort de pièce en matériau composite, la structure (10 ; 20) étant formée au moins en partie par un tissage tridimensionnel multicouches à armure de type satin, ou tissage multi-satin comprenant :
- au moins une première, une deuxième et une troisième couches adjacentes de fils de trame, les fils de trame des première, deuxième et troisième couches étant disposés en colonnes comprenant chacune un fil de trame de chacune de ces couches,
- un premier ensemble de fils de chaîne chacun saisissant alternativement un fil de trame sur n de la première couche de fils de trame et un fil de trame sur n de la deuxième couche de fils de trame adjacente à la première, et
- un deuxième ensemble de fils de chaîne chacun saisissant alternativement un fil de trame sur n de la deuxième couche de fils de trame et un fil de trame sur n de la troisième couche de fils de trame adjacente à la deuxième,
- les deux ensembles de fils de chaîne décrivant des parcours semblables mais décalés l'un par rapport à l'autre dans le sens chaîne de sorte que, dans un même plan d'armure, les fils de la deuxième couche de fils de trame saisis par un fil de chaîne du premier ensemble et par un fil de chaîne du deuxième ensemble sont différents, et
- le nombre n étant un nombre entier au moins égal à 3.

2. Structure fibreuse selon la revendication 1, dans laquelle les fils de trame saisis par un même fil de chaîne dans deux desdites couches de fils de trame sont situés dans des colonnes de fils de trame non adjacentes.

3. Structure fibreuse selon l'une quelconque des revendications 1 et 2, dans laquelle n est au moins égal à 5.

4. Structure fibreuse selon l'une quelconque des revendications 1 à 3, ayant une partie interne, ou coeur (12 ; 22), et une partie externe, ou peau (14, 16 ; 24, 26), adjacente à une surface extérieure de la structure fibreuse, dans laquelle le coeur est au moins partiellement formé par ledit tissage multi-satin.

5. Structure fibreuse selon la revendication 4, dans laquelle la peau (14, 16 : 24, 26) est formée par tissage bidimensionnel.

6. Structure fibreuse selon la revendication 5, dans laquelle le tissage en peau (14, 16) est à armure de type satin.

7. Structure fibreuse selon la revendication 6, dans laquelle le pas de satin en peau est égal au pas de satin dans une partie du coeur adjacente à la peau.

8. Structure fibreuse selon l'une quelconque des revendications 4 à 7*,* dans laquelle le coeur (22) a au moins une première et une deuxième parties formées par tissages multi-satin avec des premier et deuxième pas de satin respectifs différents.

9. Structure fibreuse selon l'une quelconque des revendications 4 à 8, dans laquelle le coeur est au moins partiellement tissé avec des fils formés de fibres discontinues et la peau est tissée avec des fils formés de filaments continus.

10. Structure fibreuse selon l'une des revendications 1 à 9, dans laquelle l'une au moins des contextures en chaîne et en trame varie dans l'épaisseur de la structure fibreuse.

11. Structure fibreuse selon la revendication 10, dans laquelle la variation de contexture est dans le sens décroissant entre coeur et peau.

12. Structure fibreuse selon l'une quelconque des revendications 1 à 11, dans laquelle des parties différentes de la structure fibreuse sont réalisées avec des fils de natures chimiques différentes.

13. Structure fibreuse selon l'une quelconque des revendications 1 à 12, dans laquelle les fils utilisés pour le tissage ont un titre qui varie au sein de la structure fibreuse.

14. Pièce en matériau composite ayant une structure fibreuse de renfort selon l'une quelconque des revendications 1 à 13 densifiée par une matrice.

15. Pièce selon la revendication 14 en matériau composite thermostructural ayant une matrice au moins partiellement formée par infiltration chimique en phase gazeuse.

## Claims

1. A reinforcing fiber texture for a composite material part, the texture (10; 20) being formed at least in part by multi-layer three-dimensional weaving with a satin type weave or multi-satin type weave, the texture comprising:
at least a first, a second, and a third adjacent layers of weft yarns, the weft yarns of the first, second and third layers being arranged in columns each including a weft yarn of each of these layers;
a first set of warp yarns each taking hold in alternation of one warp yarn in n of the first layer of warp yarns and of one warp yarn in n of the second layer of warp yarns adjacent to the first; and
a second set of warp yarns each taking hold in alternation of one weft yarn in n of the second layer of weft yarns and of one weft yarn in n of the third layer of weft yarns adjacent to the second;
both sets of warp yarns following similar paths that are offset relative to each other in the warp direction such that in a given weft plane, the yarns of the second weft yarn layer taken by a warp yarn of the first set and by a warp yarn of the second set are different; and
the number n being an integer not less than 3.

2. A fiber texture according to claim 1, wherein the weft yarns which a same warp yarn takes hold in two of said weft yarns layers are located in non-adjacent columns of weft yarns.

3. A fiber texture according to any one of claims 1 and 2, wherein n is not less than 5.

4. A fiber texture according to any one of claims 1 to 3, having an inner portion or core (12; 22) and an outer portion or skin (14, 16; 24, 26) adjacent to an outside surface of the fiber texture, wherein the core is formed at least in part by said multi-satin weave.

5. A fiber texture according to claim 4, wherein the skin (14,16; 24, 26) is formed by two-dimensional weaving.

6. A fiber texture according to claim 5, wherein the weaving of the skin (14, 16) has a satin type weave.

7. A fiber texture according to claim 6, wherein the satin pitch in the skin is equal to the satin pitch in a portion of the core adjacent to the skin.

8. A fiber texture according to any one of claims 4 to 7, wherein the core (22) has at least first and second portions formed by multi-satin weaving with respective different first and second satin pitches.

9. A fiber texture according to any one of claims 4 to 8, in which the core is woven at least in part with yarns made of discontinuous fibers, and the skin is woven with yarns made of continuous filaments.

10. A fiber texture according to any one of claims 1 to 9, in which at least one of the warp and weft structures varies in the thickness of the fiber texture.

11. A fiber texture according to claim 10, in which the structure varies in the decreasing direction from the core to the skin.

12. A fiber texture according to any one of claims 1 to 11, in which the different portions of the fiber texture are made with yarns of different chemical natures.

13. A fiber texture according to any one of claims 1 to 12, in which the yarns used for weaving present a yarn count that varies within the fiber texture.

14. A composite material part having a reinforcing fiber texture according to any one of claims 1 to 13, densified by a matrix.

15. A part according to claim 14, made of thermostructural composite material having a matrix that is formed at least in part by chemical vapor infiltration.

## Patentansprüche

1. Faserverstärkungsstruktur für ein Teil aus Verbundwerkstoff, wobei die Struktur (10; 20) wenigstens teilweise von einem dreidimensionalen Mehrschichtgewebe mit einer Bindung vom Typ Satinbindung, oder Mehrfachsatingewebe, gebildet ist, umfassend:
- wenigstens eine erste, eine zweite und eine dritte Schußfadenlage, die einander benachbart sind, wobei die Schußfäden der ersten, der zweiten und der dritten Lage in Spalten angeordnet sind, die jeweils einen Schußfaden von einer jeden dieser Lagen umfassen,
- eine erste Anordnung von Kettfäden, die jeweils abwechselnd einen von n Schußfäden der ersten Schußfadenlage und einen von n Schußfäden der zweiten Schußfadenlage, welche der ersten benachbart ist, erfassen, und
- eine zweite Anordnung von Kettfäden, die jeweils abwechselnd einen von n Schußfäden der zweiten Schußfadenlage und einen von n Schußfäden der dritten Schußfadenlage, welche der zweiten benachbart ist, erfassen,
- wobei die beiden Anordnungen von Kettfäden ähnliche, aber in Kettrichtung zueinander versetzte Bahnen beschreiben, so daß in einer gleichen Bindungsebene die Fäden der zweiten Schußfadenlage, die von einem Kettfaden der ersten Anordnung und von einem Kettfaden der zweiten Anordnung erfaßt werden, unterschiedlich sind, und
- wobei die Anzahl n eine Ganzzahl wenigstens gleich 3 ist.

2. Faserstruktur nach Anspruch 1, wobei die von einem gleichen Kettfaden in zwei der Schußfadenlagen erfaßten Schußfäden in nicht benachbarten Schußfadenspalten liegen.

3. Faserstruktur nach einem der Ansprüche 1 und 2, wobei n wenigstens gleich 5 ist.

4. Faserstruktur nach einem der Ansprüche 1 bis 3, mit einem Innenteil oder Kern (12; 22) und einem Außenteil, oder Haut (14, 16; 24, 26), das einer Außenfläche der Faserstruktur benachbart ist, wobei der Kern wenigstens teilweise von dem Mehrfachsatingewebe gebildet ist.

5. Faserstruktur nach Anspruch 4, wobei die Haut (14, 16; 24, 26) durch zweidimensionales Weben gebildet ist.

6. Faserstruktur nach Anspruch 5, wobei das Hautgewebe (14, 16) eine Bindung vom Typ Satinbindung aufweist.

7. Faserstruktur nach Anspruch 6, wobei die Teilung der Satinbindung in der Haut gleich der Teilung der Satinbindung in einem der Haut benachbarten Teil des Kerns ist.

8. Faserstruktur nach einem der Ansprüche 4 bis 7, wobei der Kern (22) wenigstens einen ersten und einen zweiten Teil aufweist, die von Mehrfachsatingeweben mit jeweiligen unterschiedlichen ersten und zweiten Satinbindungsteilungen gebildet sind.

9. Faserstruktur nach einem der Ansprüche 4 bis 8, wobei der Kern wenigstens teilweise mit von Stapelfasern gebildeten Fäden und die Haut mit von kontinuierlichen Filamenten gebildeten Fäden gewebt ist.

10. Faserstruktur nach einem der Ansprüche 1 bis 9, wobei wenigstens eine der Fadendichten in Kette und Schuß in der Dicke der Faserstruktur variiert.

11. Faserstruktur nach Anspruch 10, wobei die Änderung der Fadendichte zwischen Kern und Haut abnehmend ist.

12. Faserstruktur nach einem der Ansprüche 1 bis 11, wobei unterschiedliche Teile der Faserstruktur mit Fäden unterschiedlicher chemischer Beschaffenheit gefertigt sind.

13. Faserstruktur nach einem der Ansprüche 1 bis 12, wobei die für das Weben verwendeten Fäden einen Titer aufweisen, der innerhalb der Faserstruktur variiert.

14. Verbundwerkstoffteil, das eine Faserverstärkungsstruktur nach einem der Ansprüche 1 bis 13 aufweist, die durch eine Matrix verdichtet ist.

15. Teil nach Anspruch 14 aus hochtemperaturbeständigem Verbundwerkstoff mit einer wenigstens teilweise durch chemische Gasphaseninfiltration gebildeten Matrix.
